# EUROPÄISCHE PATENTSCHRIFT

(11) **EP 4 286 647 B1**
(45) Veröffentlichungstag und Bekanntmachung des Hinweises auf die Patenterteilung: **28.01.2026**
(21) Anmeldenummer: 23169759.0
(22) Anmeldetag: 25.04.2023
(51) Int. Cl.: F01D 5/14

(54) **RINGRAUMKONTURIERUNG**
ANNULUS CONTOURING
CONTOURNAGE D'ESPACE ANNULAIRE

(30) Priorität: 31.05.2022 DE 102022113750
(43) Veröffentlichungstag der Anmeldung: 06.12.2023
(73) Patentinhaber: MTU Aero Engines AG, 80995 München (DE)
(72) Erfinder: Brettschneider, Markus, 80995 München (DE); Maatouk, Fadi, 80995 München (DE)

(56) Entgegenhaltungen:
- EP-B1- 3 090 126
- US-A1- 2017 074 101
- US-A1- 2019 085 868
- US-B2- 10 287 901
- US-B2- 8 834 129

## Beschreibung

Die vorliegende Erfindung betrifft ein Schaufelgitterabschnitt, ein Schaufelgitter und ein System, das das vorgenannte Schaufelgitter aufweist.

Strömungsmaschinen (wie Gas- und Dampfturbinen) weisen regelmäßig einen Strömungskanal zur Durchführung eines Fluids auf. Der Strömungskanal, der auch als "Ringraum" bezeichnet wird, ist nach radial innen durch die Welle eines Rotors begrenzt und nach radial außen durch ein Gehäuse; die Bezeichnungen "radial" ebenso wie "axial" und "Umfangsrichtung" sowie davon abgeleitete Begriffe sind in dieser Schrift - sofern nichts anderes angegeben ist - in Bezug auf eine Rotationsachse des Rotors zu verstehen.

Im Ringraum einer Strömungsmaschine sind Schaufelgitter angeordnet (für die auch die Bezeichnung "Schaufelkranz" üblich ist). Sie umfassen jeweils Leit- oder Laufschaufeln, die in Umfangsrichtung in im Wesentlichen regelmäßigen Abständen hintereinanderliegen, sowie zugehörige Plattformen, die auch als "Deckplatten" bezeichnet werden und die in der Regel jeweils eine anströmseitige bzw. vorderseitige und eine abströmseitige bzw. hinterseitige Plattformkante aufweisen. Diese Plattformkanten begrenzen die Plattformoberfläche in axialer Richtung; als "Plattformoberfläche" wird dabei in dieser Schrift die dem Ringraum zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante oder "vorderseitige" Plattformkante genannt; als "abströmseitige" Plattformkante oder "hinterseitige" Plattformkante wird entsprechend der gegenüber liegende Rand bezeichnet. Die Angaben "stromab" bzw. "stromauf" oder "vorder" und "hinter" beziehen sich entsprechend auf die axiale Hauptstromrichtung und dabei lediglich auf die axiale Position, also ungeachtet einer möglichen Verschiebung in Umfangs- oder radialer Richtung: Insbesondere ist ein Punkt in dieser Schrift als "stromab der Vorderkanten" (oder als "stromab eines anderen Punktes") liegend zu verstehen, wenn er im Vergleich zu einer direkten Verbindung der Vorderkanten (miteinander) an der Plattformoberfläche (bzw. im Vergleich zum anderen Punkt) axial in/mit Hauptstromrichtung (also ihr folgend) versetzt angeordnet ist; Analoges gilt für die Bezeichnung "stromauf" (mit entgegengesetzter Richtung).

Der Abschnitt der Plattformoberfläche, der in axialer Richtung durch die direkten (also in Umfangsrichtung ohne axiale Abweichungen verlaufenden) Verbindungen der Vorderkanten bzw. der Hinterkanten benachbarter Schaufelblätter an der Plattformoberfläche begrenzt ist und in Umfangsrichtung durch die Druckseite des einen und die Saugseite des anderen Schaufelblattes, wird in dieser Schrift als "Schaufelzwischenstreifen" bezeichnet. Die Breite des Schaufelzwischenstreifens in Umfangsrichtung, insbesondere an den Vorderkanten, wird "Teilungsabstand" (des Schaufelgitters bzw. eines Schaufelgitterabschnitt s bzw. der Schaufelblätter) genannt. Er kann insbesondere als Abstand der Vorderkanten benachbarter Schaufeln in Umfangsrichtung im Bereich der Plattformoberfläche gemessen werden. Der (allein) in axialer Richtung (der Richtung des vorgesehenen axialen Hauptstroms) gemessene Abstand der Vorderkanten der Schaufelblätter von ihren Hinterkanten wird (axiale) "Gitterbreite" genannt.

Die Druckseite eines Schaufelblattes und die Saugseite eines benachbarten Schaufelblattes begrenzen in Umfangsrichtung jeweils einen sogenannten Schaufelkanal. In radialer Richtung wird dieser Schaufelkanal innerhalb der Strömungsmaschine durch sogenannte Seitenwände begrenzt. Diese werden zum einen jeweils durch die Plattformen gebildet, zum anderen durch diesen Plattformen radial gegenüberliegende Abschnitte: Im Falle von Laufschaufeln ist eine derartige gegenüberliegende Seitenwand dabei üblicherweise ein radial außen liegender Abschnitt (insbesondere des Gehäuses, insbesondere bei deckbandlosen Laufschaufeln, oder eines Laufschaufelaußendeckbandes), im Falle von Leitschaufeln üblicherweise ein radial innen liegender Abschnitt (insbesondere einer Rotornabe) oder ein radial außen liegender Abschnitt.

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden in die Seitenwände häufig Konturierungen in Form von Erhebungen und/oder Vertiefungen eingebracht.

Aus dem Stand der Technik ist eine Vielzahl von derartigen sogenannten "Seitenwandkonturierungen" bekannt. Exemplarisch seien die Patente bzw. Patentanmeldungen der Anmelderin EP 2 487 329 B1, EP 2 787 172 A2, und EP 2 696 029 B1 genannt.

Aus der EP 2 423 444 A2 ist eine Seitenwandkonturierung bekannt, bei der an der Druckseite eines ersten Schaufelblattes eine Erhebung angeordnet ist und sich parallel zur Saugseite eines benachbarten Schaufelblattes eine Vertiefung erstreckt. Die Erhebung und die Vertiefung bilden dabei einen gebogenen Kanal aus.

Seitenwandkonturierungen mit konkaven Abschnitten sind aus den Dokumenten US2017074101A1, US10287901B2 und EP3090126B1 bekannt.

Eine Aufgabe einer Ausführung der vorliegenden Erfindung ist es, eine Technik bereitzustellen, mit der Sekundärströme im Ringraum einer Strömungsmaschine auf vorteilhafte Weise weiter reduziert werden können bzw. die Technik zu verbessern.

Die Aufgabe wird gelöst durch einen Schaufelgitterabschnitt gemäß Anspruch 1, ein Schaufelgitter nach Anspruch 9 und ein System nach Anspruch 10. Vorteilhafte Ausführungsformen sind in den Unteransprüchen, der Beschreibung und den Figuren offenbart. Vorteilhafte Ausführungsformen der Erfindung sind Gegenstand der Unteransprüche.

Nach einer Ausführung der vorliegenden Erfindung wird ein Schaufelgitterabschnitt für ein Schaufelgitter einer Strömungsmaschine bereitgestellt, wobei der Schaufelgitterabschnitt eine Plattform mit einer Plattformoberfläche und einer anströmseitigen Plattformkante sowie wenigstens zwei Schaufelblätter, insbesondere ein erstes und ein zweites Schaufelblatt, aufweist, die durch ihre Vorderkanten und Hinterkanten auf der Plattformoberfläche einen Schaufelzwischenstreifen mit axialer Gitterbreite bestimmen. In einer Ausführung weist die Plattformoberfläche des Schaufelzwischenstreifens, insbesondere die Plattformoberfläche, einen Trog, insbesondere genau einen Trog, auf mit einem, insbesondere genau einem globalen, Minimum in Bezug auf eine Radialposition. Insbesondere ist der Trog in einer Ausführung derart ausgebildet, dass der Boden des Trogs ein globales Minimum des Trogs ist und in einer Ausführung ferner eine Radialposition des Trogs in Umfangsrichtung von einer Saugseite des einen (ersten) der wenigstens zwei Schaufelblätter zur Druckseite des benachbarten anderen (zweiten) der wenigstens zwei Schaufelblätter in Bezug auf eine Referenzfläche zum Boden des Trogs hin abnimmt und von dort in Umfangsrichtung zunimmt, höchstens bis zur Radialposition der Referenzfläche. Der Boden des Trogs bzw. das globale Minimum entspricht in einer Ausführung dem größten Abstand der Plattformoberfläche bzw. der Konturierung von einer Referenzfläche.

In einer Ausführung der Erfindung nimmt eine Radialposition des Trogs in Axialrichtung in Strömungsrichtung in Bezug auf eine Referenzfläche zum Boden des Trogs hin ab und von dort in Axialrichtung zu, höchstens bis zur (und einschließlich der) Radialposition der Referenzfläche.

In anderen Worten nähert sich die Radialposition der Plattformoberfläche, ausgehend vom Boden des Trogs, in Umfangs- und/oder Axialrichtung, insbesondere in jede Kombination dieser Richtungen der Radialposition der (konturierten) Plattformoberfläche an.

In einer Ausführung der Erfindung weist die Plattformoberfläche des Schaufelzwischenstreifens, insbesondere die Plattformoberfläche, einen Trog, insbesondere genau einen Trog, mit einem Maximum auf, dessen Radialposition höchstens einer Radialposition einer unkonturierten Referenz-Plattformoberfläche entspricht.

In einer Ausführung der Erfindung erreicht die Radialposition der (konturierten) Plattformoberfläche des Schaufelzwischenstreifens, insbesondere die (gesamte) Plattformoberfläche höchstens eine Radialposition der Referenzfläche, insbesondere wird die Plattformoberfläche des Schaufelzwischenstreifens, insbesondere die Plattformoberfläche, nicht von der Referenzfläche geschnitten.

In anderen Worten entspricht das Maximum des Trogs und/oder insbesondere der Plattformoberfläche des Schaufelzwischenstreifens, insbesondere der (gesamten) Plattformoberfläche, in einer Ausführung höchstens der Radialposition, insbesondere dem Radialniveau, einer theoretischen (vorzugsweise imaginären) nicht konturierten Plattformoberfläche des Schaufelzwischenstreifens und/oder einer nicht konturierten Plattformoberfläche" ist insbesondere nicht über diese Radialposition erhöht bzw. nicht höher als die Radialposition der nicht konturierten Referenz(-Plattform-Ober)fläche. Eine "Referenz-Plattformoberfläche" ist hierin vorzugsweise als Plattformoberfläche zu verstehen, die keine Konturierung aufweist, insbesondere umfangssymmetrisch ausgebildet ist und weiter insbesondere den geometrischen Abmessungen der (konturierten) Plattformoberfläche, abgesehen von der Konturierung, entspricht bzw. entsprechend identische geometrische Abmessungen, abgesehen von der Konturierung, aufweist und wird hierin vorzugsweise als "Referenzfläche" bezeichnet.

In einer Ausführung weist der Schaufelgitterabschnitt, insbesondere die Plattformoberfläche und/oder der Schaufelzwischenstreifen des Schaufelgitterabschnitts, keine Erhebung auf.

Als eine "Erhebung" ist hierin vorzugsweise eine lokale Ausformung (wie beispielsweise ein Buckel bzw. Vorsprung) der Plattformoberfläche zu verstehen, in der sich die Plattformoberfläche, insbesondere im Vergleich zu einer Plattformoberfläche einer nicht konturierten Plattform, radial in dieselbe Richtung erstreckt, in der auch die Schaufelblätter von der Plattform abstehen. Bei einer Erhebung auf einer den Ringraum nach radial außen begrenzenden Plattform erstreckt sich eine Erhebung also nach radial innen, bei einer Erhebung auf einer den Ringraum nach radial innen begrenzenden Plattform nach radial außen.

Als "Trog" ist hierin vorzugsweise eine lokale Ausformung der Plattformoberfläche in die entgegengesetzte Richtung, insbesondere in die entgegengesetzte Richtung einer Erhebung, zu verstehen (wie z.B. eine Senke, Vertiefung bzw. Nische), insbesondere in der sich die Plattformoberfläche radial entgegen der Richtung erstreckt, in der die Schaufelblätter von der Plattform abstehen. Bei einem Trog auf einer den Ringraum nach radial außen begrenzenden Plattform erstreckt sich ein Trog also nach radial außen, bei einem Trog auf einer den Ringraum nach radial innen begrenzenden Plattform nach radial innen.

Den Bezeichnungen "Erhebung" und "Trog" (ebenso wie Begriffen wie "Höhe", "Tiefe" oder ähnlichem) liegt hier also eine Orientierung bzw. ein Koordinatensystem zugrunde, bei der/dem sich die Schaufelblätter und eine Erhebung von der Plattformoberfläche jeweils nach "oben" erstrecken. Dementsprechend erstreckt sich ein Trog in die entgegengesetzte Richtung nach "unten". Eine Beschreibung mit nur einer Richtung ist daher keine Einschränkung auf nur diese Richtung, sondern kann sich auch auf die andere Richtung beziehen bzw. bezieht sich.

Als höchster bzw. tiefster Punkt wird jeweils ein Punkt einer Erhebung bzw. eines Trogs verstanden, in denen sich diese am weitesten in die jeweilige Richtung erstreckt. Die höchsten bzw. tiefsten Punkte einer Erhebung bzw. eines Trogs können jeweils einen Flächenabschnitt oder eine Kurve ausbilden oder singulär sein.

Ein Schaufelgitterabschnitt kann in einer Ausführung einteilig oder zusammengesetzt sein. In einer Ausführung kann die Plattform einteilig sein oder zwei oder mehr Teile umfassen bzw. aufweisen, von denen jeweils eines der Schaufelblätter absteht, oder die Plattform kann als separates Bauteil ausgebildet sein, das zwischen den Schaufelblättern angeordnet ist oder werden kann. Entsprechend ist eine Plattform in einer Ausführung dazu eingerichtet, in Umfangsrichtung an jeder Seite an ein Schaufelblatt anzugrenzen und mit den Schaufelblättern (von denen keines, eines oder beide fest an die Plattform angeformt sein kann) zusammen ein Schaufelgitterabschnitt gemäß einer der in dieser Schrift offenbarten Ausführungsformen auszubilden. Die Plattform kann in einer Ausführung dazu eingerichtet sein, mit ihrer anströmseitigen Plattformkante (zumindest im Wesentlichen) angrenzend an ein weiteres (separates) Element (z.B. der Nabe oder des Gehäuses oder eines anderen Schaufelgitters) in der Strömungsmaschine verwendet zu werden.

Die anströmseitige Plattformkante ist in einer Ausführung dazu eingerichtet, einen Abschnitt einer Wandung eines Spaltes auszubilden, durch den Kühlungsfluid in den Ringraum der Strömungsmaschine eingeleitet wird bzw. werden kann.

In einer Ausführung weist der Trog, insbesondere der genau eine Trog, wenigstens ein lokales Minimum und/oder wenigstens einen Sattelpunkt auf und ferner ein, insbesondere genau ein, globales Minimum bzw. einen Boden auf.

In einer Ausführung ist die Referenzfläche als Kegelmantelfläche ausgebildet, wobei die Kegelmantelfläche koaxial mit der Plattform angeordnet ist. Die Kegelmantelfläche weist in einer Ausführung eine lineare Mantellinie auf. Die Kegelmantelfläche "schneidet" die Vorder- und Hinterkante bzw. deren jeweilige Verlängerung, insbesondere jeweils in einer (radial untersten) Nabenposition ± 5%, insbesondere ± 2% der Sehnenlänge bei 50% der Radialerstreckung des Schaufelblatts, oder schneidet im Falle eines "Fillets" jeweils die nabenseitige Filletbegrenzung an denjenigen Positionen, die stromauf der Vorderkante bzw. stromab der Hinterkante, insbesondere in Verlängerung der Skelettlinie, liegen, ± 5%, insbesondere ± 2% der Sehnenlänge bei 50% der Radialerstreckung des Schaufelblatts. In einer Weiterbildung erreicht ein Maximum des Trogs in Bezug auf eine Radialposition lokal höchstens ein umfangssymmetrisches Niveau, welches durch die Referenzfläche gebildet wird. In anderen Worten ist ein Maximum des Trogs nicht über die genannte Kegelmantelfläche erhöht in Bezug auf eine Radialposition. "Referenzfläche" kann vorzugsweise auch als "Nullniveau" bzw. "Null-Referenzniveau" verstanden werden.

In einer Ausführung ist die Referenzfläche derart ausgebildet und koaxial mit der Plattformoberfläche angeordnet, insbesondere koaxial mit der Drehachse der Strömungsmaschine, dass diese die radialen Nabenpositionen der Vorderkante und der Hinterkante des Schaufelblatts höchstens plus 5% und/oder höchstens minus 5% der Sehnenlänge des Schaufelblatts bei 50% seiner radialen Erstreckung enthält. In anderen Worten ist in einer Ausführung die Referenzfläche derart ausgebildet, dass diese die radialen Nabenposition der Vorderkante des Schaufelblatts, insbesondere der Schaufelblätter, höchstens plus 5% oder höchstens minus 5% der Sehnenlänge des Schaufelblatts bei 50% der radialen Erstreckung des Schaufelblatts und die radiale Nabenposition der Hinterkante des Schaufelblatts, insbesondere der Schaufelblätter, höchstens plus 5% oder höchstens minus 5% der Sehnenlänge des Schaufelblatts bei 50% der radialen Erstreckung des Schaufelblatts, enthält, wobei die Referenzfläche (insbesondere) als Kegelmantelfläche ausgebildet ist. In einer Ausführung ist die Referenzfläche derart ausgebildet, dass diese die radiale Nabenposition der Vorderkante des Schaufelblatts, insbesondere der Schaufelblätter, plus wenigstens 1%, insbesondere wenigstens 2,5%, oder minus wenigstens 1%, insbesondere minus wenigstens 2,5%, und/oder plus höchstens 15% oder minus höchstens 15% der Sehnenlänge des Schaufelblatts bei 50% der radialen Erstreckung des Schaufelblatts und die radiale Nabenposition der Hinterkante des Schaufelblatts, insbesondere der Schaufelblätter, plus wenigstens 1%, insbesondere wenigstens 2,5%, oder minus wenigstens 1%, insbesondere wenigstens 2,5%, und/oder plus höchstens 15% und oder minus höchstens 15% der Sehnenlänge des Schaufelblatts bei 50% der radialen Erstreckung des Schaufelblatts, enthält, wobei die Referenzfläche (insbesondere) als Kegelmantelfläche ausgebildet ist. Hierdurch kann in einer Ausführung ein Maximum des Trogs und/oder insbesondere ein Maximalniveau in Bezug auf eine Radialposition des Trogs, insbesondere des genau einen Trogs, der Plattformoberflächenkonturierung derart festgelegt sein, dass eine Sekundärströmung vorteilhaft beeinflusst wird.

Unter "Nabenposition" ist hierin vorzugsweise folgendes zu verstehen: Bei einer den Ringraum nach radial außen begrenzenden Plattform ist eine Nabenposition also hierin vorzugsweise als die radial am weitesten von der Drehachse beabstandete Position, insbesondere an der Vorderkante und/oder Hinterkante des Schaufelblatts bzw. der Schaufelblätter zu verstehen. Bei einer den Ringraum nach radial innen begrenzenden Plattform ist eine Nabenposition vorzugsweise als eine am wenigsten von der Drehachse beabstandete Position, insbesondere an der Vorderkante und/oder Hinterkante des Schaufelblatts bzw. der Schaufelblätter zu verstehen. Vorzugsweise kann unter radialer "Nabenposition" 0% radialer Höhe verstanden werden.

In einer Ausführung ist das Minimum des Trogs bei einer Axialposition von wenigstens 40% und/oder höchstens 60%, jeweils bezogen auf die axiale Gitterbreite, ausgebildet, insbesondere bei einer Axialposition von wenigstens 45% und/oder höchstens 55% ausgebildet. Vorteilhafterweise kann hierdurch in einer Ausführung die Sekundärströmung besonders vorteilhaft beeinflusst werden.

Das Minimum des Trogs ist bei einer Teilung des Schaufelzwischenstreifens in Umfangsrichtung mit höchstens 10% von einer Saugseite eines Schaufelblatts des Schaufelgitterabschnitts beabstandet ausgebildet. In anderen Worten beträgt ein in Umfangsrichtung gemessener Abstand des tiefsten Punktes des Trogs von der Saugseite eines Schaufelblatts höchstens 10%, vorzugsweise höchstens 9%, höchstens 8%, höchstens 7%, höchstens 6% oder höchstens 5% eines Teilungsabstandes des Schaufelgitterabschnitt s, insbesondere kann ein tiefster Punkt des Trogs auf einer Grenzlinie zwischen der Saugseite des Schaufelblattes und der Plattformoberfläche liegen, (so dass der genannte, in Umfangsrichtung gemessene Abstand jeweils Null beträgt). Dies wirkt sich vorteilhaft auf die Sekundärströmung aus.

In einer Ausführung beginnt der Trog, insbesondere der Rand des Trogs, stromaufwärts von der Vorderkante des Schaufelblatts/der Schaufelblätter, insbesondere bei einer Axialposition, die mit wenigstens 1%, insbesondere wenigstens 2,5% und/oder höchstens 25%, insbesondere höchstens 10%, der Sehnenlänge des Schaufelblatts bei 50% seiner radialen Erstreckung von der Vorderkante des Schaufelblatts stromaufwärts beabstandet ist.

Infolge der durch die jeweiligen Krümmungen der Druckseite des ersten und der Saugseite des zweiten Schaufelblattes bewirkten Strömung können Kanalwirbel in einer Ausführung bei den genannten Ausdehnungen des Trogs mit dem wenigstens einen Minimum, insbesondere dem genau einen globalen Minimum, besonders wirkungsvoll reduziert werden.

Ein am weitesten stromaufwärts liegender Punkt einer Begrenzung des Trogs ist in einer Ausführung stromaufwärts der Vorderkanten der Schaufelblätter angeordnet, insbesondere wenigstens 1% und/oder höchstens 5% der axialen Gitterbreite vor der Vorderkante der Schaufelblätter, kann insbesondere eine mit den Vorderkanten der Schaufelblätter im Wesentlichen gemeinsame axiale Position haben, oder ist in einer Ausführung wenigstens 1% und/oder höchstens 5% der axialen Gitterbreite stromabwärts der Vorderkanten der Schaufelblätter angeordnet.

In einer Ausführung sind, insbesondere insgesamt, wenigstens 90%, insbesondere wenigstens 95% der Plattformoberfläche des Schaufelzwischenstreifens gegenüber der Referenzfläche vertieft, insbesondere sind wenigstens 90%, insbesondere wenigstens 95%, der Plattformoberfläche des Schaufelzwischenstreifens als Trog ausgebildet.

In einer Ausführung weist die Plattformkante eine Welligkeit auf, insbesondere in Umfangsrichtung. Die Welligkeit kann in einer Ausführung derart ausgebildet sein, dass eine Welle von einem Wellental zu einem Wellenkamm wenigstens einem Prozent des Abstands der Plattformkante zu einer Vorderkante eines Schaufelblatts entspricht und/oder höchstens 25% dieses Abstands. In einer Ausführung weist die Welligkeit, insbesondere der radiale Unterschied zwischen einem Wellental und einem Wellenkamm, wenigstens 1% und/oder höchstens 15% der axialen Sehnenlänge des Schaufelblatts bei 50% seiner radialen Erstreckung auf. In einer Ausführung sind Wellental und Wellenkamm in derselben von der Plattformoberfläche aufgespannten Fläche angeordnet, in anderen Worten variiert mit dem Übergang von Wellental zu Wellenkamm eine Axialposition, nicht aber eine Radialposition der Plattformkante. In einer Ausführung ist die Welligkeit in radialer Richtung ausgebildet, insbesondere die Wellentäler und Wellenkämme entlang einer Axialposition umfangssymmetrisch an der Plattformkante, insbesondere der anströmseitigen Plattformkante, ausgebildet. In anderen Worten ist in dieser Ausführung eine Axialposition der Plattformkante zumindest im Wesentlichen konstant und eine Radialposition der Plattformkante ist umfangssymmetrisch wellenartig ausgebildet, insbesondere derart, dass in einer Ausführung die Wellenkämme eine Kegelmantelfläche, insbesondere eine Kegelmantelfläche wie hierin beschrieben, (zumindest im Wesentlichen) nicht schneiden, in anderen Worten eine Radialposition der Wellenkämme nicht über die Radialposition der Kegelmantelfläche hinausgeht, insbesondere höchstens einer Radialposition der Kegelmantelfläche entspricht. In einer Ausführung ist die Welligkeit sowohl in der Radialposition als auch der Axialposition der Plattformkante ausgebildet, dies entspricht insbesondere einer Mischung, insbesondere Kombination, der zuvor beschriebenen Ausführungen einer Welligkeit der Plattformkante. In einer Ausführung weist die Welligkeit, insbesondere der radiale Unterschied und/oder der axiale Unterschied zwischen einem Wellental und einem Wellenkamm, wenigstens 1% und/oder höchstens 15% der axialen Sehnenlänge des Schaufelblatts bei 50% seiner radialen Erstreckung auf. Vorteilhafterweise kann hierdurch in einer Ausführung eine Anströmung der Schaufelblätter optimiert werden, insbesondere Wirbel reduziert werden. Ferner können in einer Ausführung Schallemissionen verbessert, insbesondere reduziert werden.

Nach einer Ausführung führt ein Schaufelkanal durch einen hierin beschriebenen Schaufelgitterabschnitt, insbesondere einen Schaufelgitterabschnitt gemäß einer der in dieser Schrift offenbarten Ausführungsformen, ist also durch einen derartigen Schaufelgitterabschnitt sowie eine dessen Plattform gegenüberliegende (der Plattformoberfläche zugewandte) Seitenwand begrenzt. In Umfangsrichtung ist nach einer Ausführung ein hierin beschriebener Schaufelkanal durch die Druckseite eines der Schaufelblätter des Schaufelgitterabschnitts und durch die dieser gegenüberliegende Saugseite des (benachbarten) anderen der Schaufelblätter begrenzt.

Nach einer Ausführung wird ein Schaufelkanal für eine Strömungsmaschine bereitgestellt, der durch einen Schaufelgitterabschnitt wie hierin beschrieben, sowie durch eine der Plattform des Schaufelgitterabschnitts gegenüberliegende Seitenwand begrenzt ist.

In einer Ausführung der Erfindung wird ein Schaufelgitter bereitgestellt. Nach einer Ausführung umfasst das Schaufelgitter mindestens einen hierin beschriebenen Schaufelgitterabschnitt, insbesondere gemäß einer der in dieser Schrift offenbarten Ausführungsformen.

In einer Ausführung der Erfindung wird ein System bereitgestellt. Nach einer Ausführung weist das System wenigstens ein Schaufelgitter, insbesondere ein Schaufelgitter mit wenigstens einem Schaufelgitterabschnitt wie hierin beschrieben, auf.

Nach einer Ausführung entspricht die Plattformoberfläche des wenigstens einen Schaufelgitterabschnitts des Systems wenigstens einem Teil einer radial inneren Plattformwand eines Leitschaufelclusters, insbesondere eines Leitschaufelclusters des Systems.

Nach einer Ausführung weist das System eine Turbine und/oder einen Verdichter auf, insbesondere kann das System eine Strömungsmaschine, insbesondere eine Turbine und/oder ein Verdichter sein, weiter insbesondere eine Niederdruckturbine eines Flugtriebwerks.

Nach einer Ausführung umfasst ein als Strömungsmaschine ausgebildetes System ein oder mehrere hierin beschriebene Schaufelgitter.

In einer Ausführung kann durch die Geometrie der Plattformoberfläche das statische Druckfeld an der Plattformoberfläche und auf die Schaufeln, vorzugsweise im Randbereich, beeinflusst, insbesondere verbessert werden. Vorteilhafterweise kann in einer Ausführung jeweils eine Reduktion der Sekundärströmung, insbesondere von Wirbeln im Schaufelkanal, ermöglicht werden bzw. wird dies durch die Geometrie der Plattformoberfläche erreicht. Auf diese Weise können in einer Ausführung Verluste verringert und/oder die Zuströmung in ein ggf. stromab liegendes weiteres Schaufelgitter verbessert werden.

In einer Ausführung kann die Plattformoberfläche des Schaufelzwischenstreifens, insbesondere die Plattformoberfläche, ein Maximum, insbesondere eine Nullhöhenfläche, aufweisen, also einen Oberflächenabschnitt, der, insbesondere vollständig, auf Nullniveau liegt. Dieser Abschnitt macht in einer Ausführung höchstens 10% des Schaufelzwischenstreifens aus bzw. umfasst höchstens 10% der Plattformoberfläche zwischen den Schaufelblättern und ist insbesondere derart angeordnet, dass ein Abstand des Maximums, insbesondere der Nullhöhenfläche, von der Druckseite des Schaufelblatts vorzugsweise höchstens 40%, höchstens 20%, höchstens 10%, höchstens 5%, oder höchstens 2,5% eines Teilungsabstandes des Schaufelgitterabschnitts beträgt.

In einer Ausführung ist der Schaufelgitterabschnitt bzw. das Schaufelgitter bzw. der Strömungskanal bzw. die Plattform insbesondere Teil einer Niederdruckturbine bzw. ist dazu eingerichtet, in einer Niederdruckturbine eingebaut bzw. verwendet zu werden. Die Schaufelblätter können in einer Ausführung jeweils Leit- oder Laufschaufelblätter sein. Die Plattform ist in einer Ausführung ferner dazu eingerichtet, einen Schaufelkanal durch den Schaufelgitterabschnitt nach radial innen oder nach radial außen zu begrenzen.

Nach einer Ausführung ist ein etwaig vorhandenes Fillet nicht Teil der Ringraumkonturierung, insbesondere nicht Teil des Trogs der Plattformoberfläche der Plattform. In einer Ausführung ist eine Nabenposition bei einem etwaig vorhandenen Fillet radial unterhalb des Fillets angeordnet, insbesondere bei einer Radialposition, die radial unter bzw. niedriger ist als das Fillet bzw. wobei die Nabenposition höchstens eine Radialposition aufweist, die mit der untersten Radialposition des Fillets übereinstimmt, insbesondere in einer Verlängerung der Vorderkante und/oder der Hinterkante des Schaufelblatts. Ein "Fillet" wie hierin verwendet ist vorzugsweise als Wurzelausrundung des Schaufelblatts zu verstehen. Im Zweifel ist ein Fillet in einer Ausführung als Teil des Schaufelblatts zu verstehen. Entsprechend wird in einer Ausführung eine Nabenposition des Schaufelblatts (das Fillet umfassend) ermittelt.

Hierin beschriebene Ausführungen der Erfindung können (erfindungsgemäß) kombiniert werden, wo immer dies technisch sinnvoll und machbar ist.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Schaufelgitterabschnitt in Draufsicht nach einer Ausführung der vorliegenden Erfindung; und
- Fig. 2: ein Schaufelgitterabschnitt in einem Schnitt in einer Frontalansicht nach einer Ausführung.

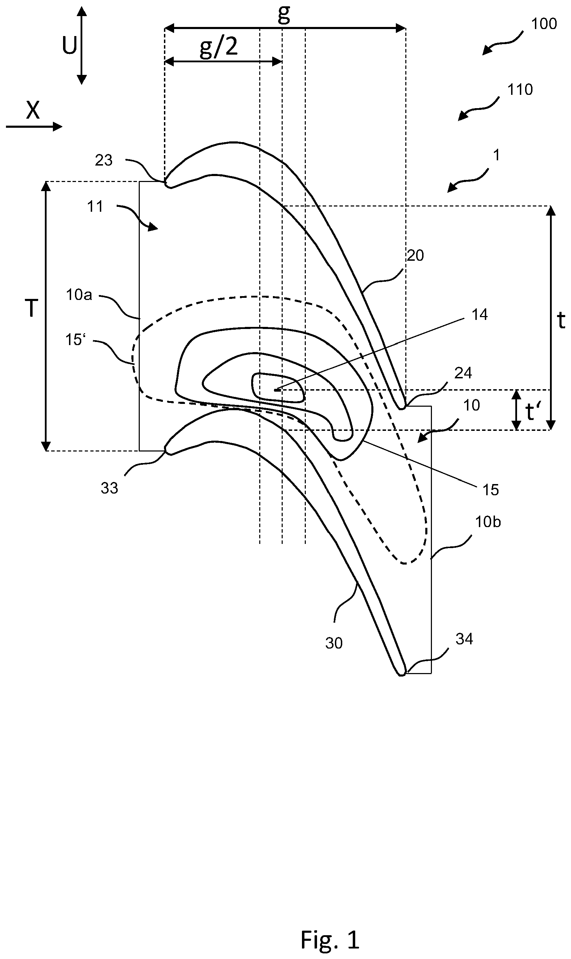

Fig. 1 zeigt schematisch Schaufelgitterabschnitt in Draufsicht (mit radialer Blickrichtung) in abgewickelter Darstellung. Er umfasst Schaufelblätter 20, 30, die jeweils eine Druckseite und eine Saugseite aufweisen, sowie eine Plattform 10 mit einer Plattformoberfläche, einer (bezogen auf die vorgesehene Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Die Schaufelblätter definieren einen Schaufelzwischenstreifen als den Oberflächenabschnitt, der in Umfangsrichtung U zwischen der Druckseite des ersten Schaufelblattes 20 und der Saugseite des zweiten Schaufelblattes 30 liegt und der in axialer Richtung X anströmseitig durch eine Verbindung der Vorderkanten 23, 33 der Schaufelblätter 20, 30 und abströmseitig durch eine Verbindung der jeweiligen Hinterkanten 24, 34 begrenzt wird. Die genannten Verbindungen verlaufen dabei auf der Plattformoberfläche rein in Umfangsrichtung U (also ohne Abweichung in axialer Richtung), und sie haben einen Abstand voneinander, welcher der axialen Gitterbreite g des Schaufelgitterabschnitts entspricht. Die Plattformoberfläche weist im Schaufelzwischenstreifen 11 eine Konturierung auf, die durch einen, insbesondere genau einen, Trog 15 realisiert ist.

Ein Teilungsabstand T ist als der Abstand der Vorderkanten 23, 33 voneinander an der Plattformoberfläche definiert, eine Teilung t als der Abstand von der Saugseite des einen Schaufelblatts zur Druckseite des anderen Schaufelblatts an einer axialen Position. Der Abstand t' des Minimums 14 von der Saugseite (insbesondere bezogen auf eine Teilung) entspricht in der Darstellung höchstens 10% der Teilung t. Der Schaufelgitterabschnitt 1 kann Teil eines Schaufelgitters 110 sein bzw. ein Schaufelgitter 110 kann wenigstens einen Schaufelgitterabschnitt 1 umfassen, der für ein System 100 ausgebildet ist.

Der Trog 15, wie nicht verhältnisgetreu und schematisch in Figur 1 dargestellt, befindet sich bei einer Axialposition von wenigstens 40% und höchstens 60% bezogen auf die axiale Gitterbreite g, wie mit g/2 für 50% der axialen Gitterbreite g beispielhaft dargestellt.

Mit 15' ist ein Beginn eines Trogs bzw. Rand des Trogs dargestellt, der vor der Vorderkante 23, 33 der Schaufelblätter 20, 30 beginnt und in der hier dargestellten Ausführung zusätzlich über die axiale Position der Hinterkante der Schaufelblätter 20, 30 in Strömungsrichtung hinausgeht.

Eine Welligkeit der anströmseitigen Plattformkante 10a ist nicht dargestellt. Diese würde beispielsweise einer wellenförmigen Linie 10a entsprechen.

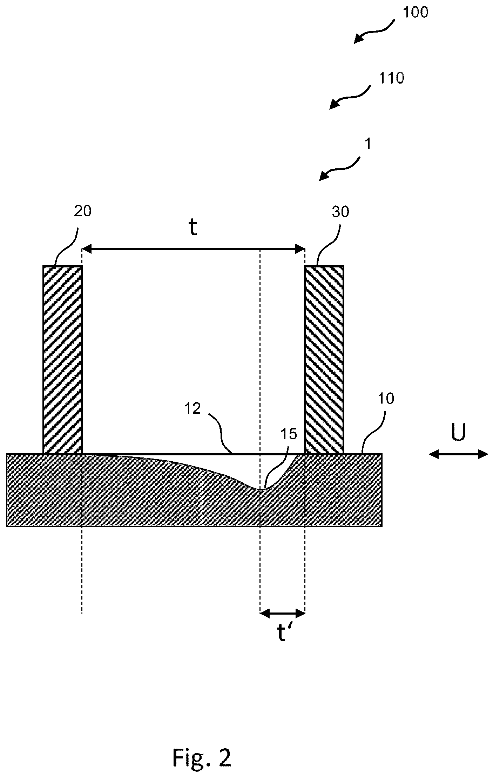

In Figur 2 ist schematisch ein Schaufelgitterabschnitt 1 in einem Schnitt an der axialen Position des (globalen) Minimums des Trogs 15 in einer Frontalansicht dargestellt, also beispielsweise aus Hauptströmungsrichtung X. Der Schaufelgitterabschnitt kann Teil eines Schaufelgitters 110 sein, das für ein System 100 ausgebildet ist. Ferner ist zur Orientierung die Umfangsrichtung U dargestellt. Die Schaufelblätter 20, 30 sind ebenfalls im Schnitt an dieser axialen Position dargestellt, wobei auf eine ausführungsgetreue Darstellung der Verbindung der Schaufelblätter mit der Plattform verzichtet wurde und eine vereinfachte Darstellung gewählt wurde, bei der die Schaufelblätter 20, 30 und die Plattform 10 als separate Bauteile im Schnitt dargestellt sind. Das Minimum 15 ist mit weniger als 10% der Teilung t von der Saugseite des Schaufelblatts 30 beabstandet t'. Der Trog 15 weist im Vergleich zu einer Kegelmantelfläche 12 (hier vereinfacht dargestellt) keine Erhebung auf, ist also in Bezug auf eine Radialposition "unter" der Kegelmantelfläche 12 angeordnet. Ferner ist in Fig. 2 angedeutet, dass der Trog ein Maximum hat, das höchstens der Radialposition einer unkonturierten Plattformoberfläche, insbesondere höchstens einer Radialposition einer Kegelmantelfläche 12 entspricht. Exemplarisch trifft dies für den Trog 15, wie er in Fig. 2 dargestellt ist an der im Bild links dargestellten Seite des Trogs 15 auf der Druckseite des Schaufelblatts 20 zu. Ferner weist die Plattformoberfläche des Schaufelzwischenstreifens 11 keine Erhebung auf.

Obwohl in der vorhergehenden Beschreibung exemplarische Ausführungen erläutert wurden, sei darauf hingewiesen, dass eine Vielzahl von Abwandlungen möglich ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Schaufelgitterabschnitt
- 10: Plattform
- 10a: anströmseitigen Plattformkante
- 10b: abströmseitigen Plattformkante
- 11: Schaufelzwischenstreifen
- 12: Kegelmantelfläche als Referenzfläche
- 14: (globales) Minimum
- 15: Trog
- 15': (andere) Ausführung eines Trogs
- 20, 30: Schaufelblatt
- 23, 33: Vorderkanten
- 24, 34: Hinterkanten
- 100: System
- 110: Schaufelgitter

- g: axiale Gitterbreite
- g/2: 50% axiale Gitterbreite
- T: Teilungsabstand
- t: Teilung
- t': Abstand von der Saugseite
- U: Umfangsrichtung
- X: vorgesehene axiale Hauptstromrichtung

## Patentansprüche

1. Schaufelgitterabschnitt (1) für ein Schaufelgitter einer Strömungsmaschine, wobei der Schaufelgitterabschnitt eine Plattform (10) mit einer Plattformoberfläche und einer anströmseitigen Plattformkante (10a) sowie wenigstens zwei in Umfangsrichtung benachbarte Schaufelblätter (20, 30) umfasst, die durch ihre Vorder- und Hinterkanten (23, 33, 24, 34) auf der Plattformoberfläche einen Schaufelzwischenstreifen (11) mit axialer Gitterbreite (g) bestimmen, wobei die Plattformoberfläche des Schaufelzwischenstreifens (11), einen Trog (15) aufweist mit einem Boden, wobei der Trog (15) derart ausgebildet ist, dass der Boden des Trogs (15) ein globales Minimum (14) des Trogs (15) ist und eine Radialposition des Trogs (15) in Umfangsrichtung (U) von einer Saugseite des einen der wenigstens zwei Schaufelblätter (20, 30) zur Druckseite des benachbarten anderen der wenigstens zwei Schaufelblätter (20, 30) in Bezug auf eine Referenzfläche zum Boden des Trogs (15) hin abnimmt und von dort in Umfangsrichtung (U) zunimmt, höchstens bis zu einer Radialposition der Referenzfläche und wobei eine Radialposition des Trogs (15) in Axialrichtung stromab in Bezug auf die Referenzfläche zum Boden des Trogs (15) hin abnimmt und von dort in Axialrichtung stromab zunimmt, höchstens bis zu einer Radialposition der Referenzfläche und wobei die Plattformoberfläche des Schaufelzwischenstreifens (11) höchstens eine Radialposition der Referenzfläche annimmt, wobei die Referenzfläche einer unkonturierten Plattformoberfläche entspricht, **dadurch gekennzeichnet, dass** das globale Minimum bei einer Teilung (t) des Schaufelzwischenstreifens in Umfangsrichtung mit höchstens 10% (t') von einer Saugseite beabstandet ausgebildet ist.

2. Schaufelgitterabschnitt (1) nach dem vorhergehenden Anspruch, **dadurch gekennzeichnet, dass** die Referenzfläche (12) als Kegelmantelfläche ausgebildeten ist, welche koaxial mit der Plattform angeordnet ist, und ein Maximum der Plattformoberfläche des Schaufelzwischenstreifens (11), insbesondere des Trogs (15), in Bezug auf eine Radialposition lokal höchstens ein umfangssymmetrisches Niveau erreicht, welches durch die Referenzfläche (12) gebildet wird.

3. Schaufelgitterabschnitt (1) nach einem der vorhergehenden Ansprüche, **dadurch gekennzeichnet, dass** die Referenzfläche (12) derart ausgebildet ist, dass diese die radialen Nabenpositionen der Vorderkante (23, 33) und der Hinterkante (24, 34) des Schaufelblatts höchstens plus 5% oder höchstens minus 5% der Sehnenlänge des Schaufelblatts (20, 30) bei 50% seiner radialen Erstreckung enthält.

4. Schaufelgitterabschnitt (1) nach einem der vorhergehenden Ansprüche, **dadurch gekennzeichnet, dass** das globale Minimum bei einer Axialposition von wenigstens 40% und/oder höchstens 60%, jeweils bezogen auf die axiale Gitterbreite (g), ausgebildet ist.

5. Schaufelgitterabschnitt (1) nach einem der vorhergehenden Ansprüche, **dadurch gekennzeichnet, dass** der Trog (15) stromaufwärts von der Vorderkante (23, 33) des Schaufelblatts (20, 30) beginnt, insbesondere bei einer Axialposition, die mit höchstens 5% der Sehnenlänge des Schaufelblatts bei 50% seiner radialen Erstreckung von der Vorderkante (23, 33) des Schaufelblatts (20, 30) stromaufwärts beabstandet ist.

6. Schaufelgitterabschnitt (1) nach einem der vorhergehenden Ansprüche, **dadurch gekennzeichnet, dass** die Plattformoberfläche des Schaufelzwischenstreifens (11) keine Erhebung aufweist, insbesondere dass eine Radialposition der Plattformoberfläche des Schaufelzwischenstreifens höchstens eine Radialposition der Referenzfläche erreicht.

7. Schaufelgitterabschnitt (1) nach einem der vorhergehenden Ansprüche, **dadurch gekennzeichnet, dass** insgesamt wenigsten 90%, insbesondere wenigstens 95% der Plattformoberfläche des Schaufelzwischenstreifens gegenüber der Referenzfläche vertieft ist, insbesondere als Trog ausgebildet ist.

8. Schaufelgitterabschnitt (1) nach einem der vorhergehenden Ansprüche, **dadurch gekennzeichnet, dass** die Plattformkante (10a, 10b) eine Welligkeit aufweist, insbesondere in Umfangsrichtung (U).

9. Schaufelgitter (110) für eine Strömungsmaschine, umfassend wenigstens einen Schaufelgitterabschnitt (1) nach einem der vorhergehenden Ansprüche.

10. System (100), wobei das System (100) ein Schaufelgitter (110) nach dem vorhergehenden Anspruch aufweist, **dadurch gekennzeichnet, dass** die Plattformoberfläche des wenigstens einen Schaufelgitterabschnitts (1) wenigstens einem Teil einer radial inneren Plattformwand eines Leitschaufelclusters des Systems (100) entspricht.

11. System (100) nach dem vorhergehenden Anspruch, **dadurch gekennzeichnet, dass** das System (100) eine Turbine und/oder einen Verdichter aufweist, insbesondere eine Turbine und/oder ein Verdichter ist, insbesondere eine Niederdruckturbine eines Flugtriebwerks, mit wenigstens einem Schaufelgitter (110).

## Claims

1. Blade row portion (1) for a blade row of a turbomachine, the blade row portion comprising a platform (10) with a platform surface and an upstream-flow-side platform edge (10a) and comprising at least two airfoils (20, 30) which are adjacent in the circumferential direction and which by means of their leading and trailing edges (23, 33, 24, 34) define, on the platform surface, a blade intermediate strip (11) with an axial row width (g), the platform surface of the blade intermediate strip (11) having a trough (15) with a bottom, the trough (15) being designed in such a way that the bottom of the trough (15) is a global minimum (14) of the trough (15) and a radial position of the trough (15) decreases, with respect to a reference surface, down to the bottom of the trough (15) in the circumferential direction (U) from a suction side of one of the at least two airfoils (20, 30) to the pressure side of the adjacent other of the at least two airfoils (20, 30) and increases from said bottom in the circumferential direction (U), at most up to a radial position of the reference surface, and a radial position of the trough (15) decreasing, with respect to the reference surface, down to the bottom of the trough (15) downstream in the axial direction and increasing from said bottom downstream in the axial direction, at most up to a radial position of the reference surface, and the platform surface of the blade intermediate strip (11) assuming at most a radial position of the reference surface, the reference surface corresponding to an uncontoured platform surface, **characterized in that** in the case of a pitch (t) of the blade intermediate strip in the circumferential direction, the global minimum is spaced apart from a suction side by at most 10% (t').

2. Blade row portion (1) according to the preceding claim,
**characterized in that** the reference surface (12) is designed as a conical surface which is arranged coaxially with the platform, and a maximum of the platform surface of the blade intermediate strip (11), in particular of the trough (15), locally reaches at most a circumferentially symmetric level with respect to a radial position, which level is formed by the reference surface (12).

3. Blade row portion (1) according to either of the preceding claims,
**characterized in that** the reference surface (12) is designed in such a way that it contains the radial hub positions of the leading edge (23, 33) and the trailing edge (24, 34) of the airfoil plus at most 5% or minus at most 5% of the chord length of the airfoil (20, 30) at 50% of its radial extent.

4. Blade row portion (1) according to any of the preceding claims, **characterized in that** the global minimum is formed at an axial position of at least 40% and/or at most 60%, in each case with reference to the axial row width (g).

5. Blade row portion (1) according to any of the preceding claims, **characterized in that** the trough (15) begins upstream of the leading edge (23, 33) of the airfoil (20, 30), in particular at an axial position that is spaced apart, upstream, from the leading edge (23, 33) of the airfoil (20, 30) by at most 5% of the chord length of the airfoil at 50% of its radial extent.

6. Blade row portion (1) according to any of the preceding claims, **characterized in that** the platform surface of the blade intermediate strip (11) has no elevation, in particular **in that** a radial position of the platform surface of the blade intermediate strip reaches at most a radial position of the reference surface.

7. Blade row portion (1) according to any of the preceding claims, **characterized in that** a total of at least 90%, in particular at least 95%, of the platform surface of the blade intermediate strip is recessed relative to the reference surface, in particular is designed as a trough.

8. Blade row portion (1) according to any of the preceding claims, **characterized in that** the platform edge (10a, 10b) has a wavy shape, in particular in the circumferential direction (U).

9. Blade row (110) for a turbomachine, comprising at least one blade row portion (1) according to any of the preceding claims.

10. System (100), the system (100) having a blade row (110) according to the preceding claim, **characterized in that** the platform surface of the at least one blade row portion (1) corresponds to at least a part of a radially inner platform wall of a guide vane cluster of the system (100).

11. System (100) according to the preceding claim, **characterized in that** the system (100) has a turbine and/or a compressor, in particular is a turbine and/or a compressor, in particular a low-pressure turbine of an aircraft engine, comprising at least one blade row (110).

## Revendications

1. Section de grille d'aube (1) pour une grille d'aube d'une turbomachine, dans laquelle la section de grille d'aube comprend une plate-forme (10) comportant une surface de plate-forme et un bord de plate-forme (10a) côté arrivée de l'écoulement, ainsi qu'au moins deux pales d'aube (20, 30) voisines dans la direction circonférentielle, qui déterminent par leurs bords avant et arrière (23, 33, 24, 34) sur la surface de plate-forme une bande intermédiaire d'aube (11) comportant une largeur de grille axiale (g), dans laquelle la surface de plate-forme de la bande intermédiaire d'aube (11) présente une cuve (15) comportant un fond, dans laquelle la cuve (15) est réalisée de telle sorte que le fond de la cuve (15) est un minimum global (14) de la cuve (15) et une position radiale de la cuve (15) dans la direction circonférentielle (U) d'un côté aspiration de l'une des au moins deux pales d'aube (20, 30) au côté pression de l'autre pale adjacente des au moins deux pales d'aube (20, 30) diminue par rapport à une surface de référence vers le fond de la cuve (15) et augmente de là dans la direction circonférentielle (U), au plus jusqu'à une position radiale de la surface de référence, et dans laquelle une position radiale de la cuve (15) diminue dans la direction axiale en aval par rapport à la surface de référence vers le fond de la cuve (15) et augmente de là dans la direction axiale en aval, au plus jusqu'à une position radiale de la surface de référence et dans laquelle la surface de plate-forme de la bande intermédiaire d'aube (11) adopte au plus une position radiale de la surface de référence, dans laquelle la surface de référence correspond à une surface de plate-forme non profilée, **caractérisée en ce que** le minimum global est formé à un pas (t) de la bande intermédiaire d'aube dans la direction circonférentielle avec au plus 10 % (t') d'écart par rapport à un côté d'aspiration.

2. Section de grille d'aube (1) selon la revendication précédente, **caractérisée en ce que** la surface de référence (12) est réalisée comme une surface d'enveloppe conique qui est agencée coaxialement avec la plate-forme, et un maximum de la surface de plate-forme de la bande intermédiaire d'aube (11), en particulier de la cuve (15), par rapport à une position radiale, atteint localement au plus un niveau de symétrie circonférentielle qui est formé par la surface de référence (12).

3. Section de grille d'aube (1) selon l'une quelconque des revendications précédentes, **caractérisée en ce que** la surface de référence (12) est réalisée de telle sorte qu'elle contient les positions radiales de moyeu du bord avant (23, 33) et du bord arrière (24, 34) de la pale d'aube sur au plus plus 5 % ou au plus moins 5 % de la longueur de corde de la pale d'aube (20, 30) à 50 % de son extension radiale.

4. Section de grille d'aube (1) selon l'une des revendications précédentes, **caractérisée en ce que** le minimum global est réalisé à une position axiale d'au moins 40 % et/ou d'au plus 60 %, respectivement par rapport à la largeur axiale de grille (g).

5. Section de grille d'aube (1) selon l'une des revendications précédentes, **caractérisée en ce que** la cuve (15) débute en amont du bord avant (23, 33) de la pale d'aube (20, 30), en particulier à une position axiale espacée du bord avant (23, 33) de la pale d'aube (20, 30) en amont d'au plus 5 % de la longueur de corde de la pale d'aube à 50 % de son extension radiale.

6. Section de grille d'aube (1) selon l'une des revendications précédentes, **caractérisée en ce que** la surface de plate-forme de la bande intermédiaire d'aube (11) ne présente aucune élévation, **en particulier en ce qu'**une position radiale de la surface de plate-forme de la bande intermédiaire d'aube atteint au plus une position radiale de la surface de référence.

7. Section de grille d'aube (1) selon l'une des revendications précédentes, **caractérisée en ce qu'**au total au moins 90 %, en particulier au moins 95 % de la surface de plate-forme de la bande intermédiaire d'aube est en retrait par rapport à la surface de référence, en particulier est réalisée sous forme de cuve.

8. Section de grille d'aube (1) selon l'une des revendications précédentes, **caractérisée en ce que** le bord de plateforme (10a, 10b) présente une ondulation, en particulier dans la direction circonférentielle (U).

9. Grille d'aube (110) pour une turbomachine, comprenant au moins une section de grille d'aube (1) selon l'une des revendications précédentes.

10. Système (100), dans lequel le système (100) présente une grille d'aube (110) selon la revendication précédente, **caractérisé en ce que** la surface de plate-forme de l'au moins une section de grille d'aube (1) correspond à au moins une partie d'une paroi de plate-forme radialement intérieure d'un amas d'aubes directrices du système (100).

11. Système (100) selon la revendication précédente, **caractérisé en ce que** le système (100) présente une turbine et/ou un compresseur, en particulier est une turbine et/ou un compresseur, en particulier une turbine basse pression d'un moteur d'avion, comportant au moins une grille d'aube (110).
